# EUROPEAN PATENT SPECIFICATION

(11) **EP 0 838 142 B1**
(45) Date of publication and mention of the grant of the patent: **18.07.2001**
(21) Application number: 98200078.8
(22) Date of filing: 13.01.1993
(51) Int. Cl.: A01C 17/00

(54) **An implement for spreading material**
Gerät zum Streuen von Material
Outil pour épandre de la matière

(30) Priority: 15.01.1992 NL 9200063; 30.09.1992 NL 9201689
(43) Date of publication of application: 29.04.1998
(62) Divisional of application: 93200080.5
(73) Proprietor: MAASLAND N.V., 3155 PD Maasland (NL)
(72) Inventor: Bom, Cornelis Johannes Gerardus, 3181 VC Rozenburg (NL); Van der Waal, Pieter Jacob, 3145 LB Maassluis (NL)
(74) Representative: Corten, Maurice Jean F.M.

(56) References cited:
- EP-A- 0 347 643

## Description

The invention relates to an implement for spreading material, comprising at least two spreader members arranged at opposite sides of a plane of symmetry, each of these spreader members being rotatable driven about an upwardly extending axis of rotation in opposite directions, which directions are in plan view at the outersides of the implement backwards, the implement being provided behind the rear side of a spreader member viewed in the direction of movement, with a guide member for the material to be spread, said guide member having a number of guide elements.

Such an implement is known from EP 0 347 643 A1.

In this document an implement is described provided with a guide member to limit the amount of material to be spread into the direction of a plane of symmetry of the implement. If the implement would spread along a fence the spreader member at the side of the fence must be put out of work and the spreader member away from the fence which is provided with the guide member which is rotating, such that this spreader member throws the material up to the plane of symmetry of the implement. With this construction the material is spread until a relatively large distance from the fence.

The aim of the invention is to provide an implement with which it is possible to spread the material relatively close to the fence, but without spreading it into the fence.

According to the invention guide plates are arranged between some consecutive guide elements, and in that by means of their ends these guide plates closest to the spreader members, are contiguous to the ends of collecting members of some of the guide elements.

The invention relates also to a guide member for use with an implement according to the invention.

An implement of the type defined in the foregoing which spreads the material equally far to both sides of the implement, can advantageously be used, when designed in accordance with the invention, for spreading the material in an adequate manner along the edges of the surface to be spread, in such a manner that the material is spread along these edges in equal quantities per unit of surface, without the material being spread beyond the edge of the surface to be spread.

An advantageous embodiment of the implement in accordance with the invention is obtained, when the plurality of guide elements distributed over the-portion of the spreader member circumference are contiguous thereto in such a manner that from a guide element located near the centre longitudinal plane the successive guide elements have at least their ends, which determine the direction of spread and along which the material leaves the guide elements during operation, located at an ever increasing distance from the centre longitudinal plane. In accordance with a further embodiment, the guide element located near the centre longitudinal plane can extend at least substantially parallel to this plane. So as to allow an advantageous influencing of the spread of the material spread via the guide member, the spread direction end of a guide element located farthest from the centre longitudinal plane extends, in accordance with the invention, at an angle of at least approximately 90° to the centre longitudinal plane.

An advantageous embodiment of the implement in accordance with the invention is further obtained, when the spread direction ends of adjacently arranged guide elements extend relative to each other at angles which, in a direction away from the centre longitudinal plane, get increasingly larger.

According to the invention, a more advantageous distribution of the material via the spreader member can be obtained, when those ends of the guide elements which are nearest to the circumference of the spreader member are distributed along the circumference of the spreader member at least approximately equidistantly. In accordance with a further embodiment, the guide member connects to at least approximately half of the circumferential angle of the spreader member, through which the material is spread by the spreader member during operation. An advantageous construction of the guide member is obtained, when it includes a plate-like carrier provided at the upper side of the guide elements. The operation of the guide member is advantageously influenced, when the spaces between the guide elements in a direction towards their bottom ends are at least substantially open. In this manner, clogging of the material between the guide elements can be prevented in a simple manner. The spread of the material by the guide member can advantageously be influenced for certain circumstances, when the spread direction portion of at least one guide element is adjustable and optionally lockable in one of at least two different positions relative to the receiving portion of the guide element. The spread of the material can further be influenced in an advantageous manner, when the guide member, in its operating position in which it connects to the circumference of the spreader member, is adjustable relative to the frame of the implement.

For a better understanding of the invention and to show how the same may be carried into effect, reference will now be made, by way of example, to the accompanying drawings of an embodiment of the invention, in which drawings:
Figure 1 is a schematic plan view of the manner in which the material is spread in an embodiment of the implement in accordance with the invention over a surface to be spread;
Figure 2 is a schematic vertical cross-sectional view of the spread pattern of the embodiment of the implement in accordance with the invention;
Figure 3 is a plan view of the embodiment of the implement in accordance with the invention, in which the hopper of the implement has been omitted;
Figure 4 is, to an enlarged scale, a plan view of the spreader member and a horizontal cross-sectional view of the guide member of the embodiment of the implement in accordance with the invention;
Figure 5 is a side view of the embodiment of the implement in accordance with the invention, taken in the direction of arrow V in Figure 3;
Figure 6 is a side view of a still further connection of the guide member in the embodiment of the implement in accordance with the invention; and
Figure 7 is a rear view of the connection shown in Figure 6, taken in the direction of arrow VII in Figure 6.

The invention relates to an implement for spreading material over a surface area, more specifically for spreading material, such as, for example, fertilizer over agricultural fields. Usually, the implement in accordance with the invention spreads the material during travel over the surface to be spread to both sides of the longitudinal axis of the implement through equal distances. In this situation, the material can be spread over a strip having a width of, for example, approximately 48 metres. Depending on the material to be spread and the manner in which the implement is further designed, this width may be different or be chosen differently, respectively. The implement may be a self-propelled machine or, as in the embodiment shown, an implement which can be mounted to a tractor or a suchlike vehicle.

In accordance with the embodiment shown, the implement is couplable to a tractor 2, by means of which it is moved during operation over the surface to be spread.

The implement in accordance with the invention has, as is illustrated in the embodiments shown, two spreader members 3 and 4 which can each be caused to rotate during operation about respective rotary shafts 5 and 6. The spreader members 3 and 4 are located transversely to the longitudinal axis of the implement in a side-by-side relationship and on either side of said longitudinal axis. The implement includes a frame 7, to which a hopper 8 is attached. During operation, the material to be spread is supplied from the hopper 8 to the spreader members 3 and 4, which each, during normal operation, spread the material at least substantially through the overall spread width and on both sides of the longitudinal axis of the implement over at least substantially equal distances.

The quantity of material that can be fed per unit of time from the hopper 8 to the spreader members 3 and 4 can be controlled by means of a dosing member 9 arranged between the hopper and each spreader member 3 and 4. The dosing members 9 are basically identical to each other and are therefore not shown individually. The dosing members include dish-like discharge members 10 which connect up with the bottom ends of two nozzle-like portions of the hopper 8. In this embodiment, each of the discharge members has two discharge apertures 11, through which the material can be supplied from the hopper to the spreader members. The discharge apertures 11 can optionally be closed to a greater or lesser extent in order to control the quantity of material which can be fed to the spreader members per unit of time. In this embodiment, closing members 12 can be moved for that purpose along the discharge apertures 11 and optionally be locked in one of a plurality of positions. The closing members are coupled to an adjusting member 13 provided on the frame of the implement.

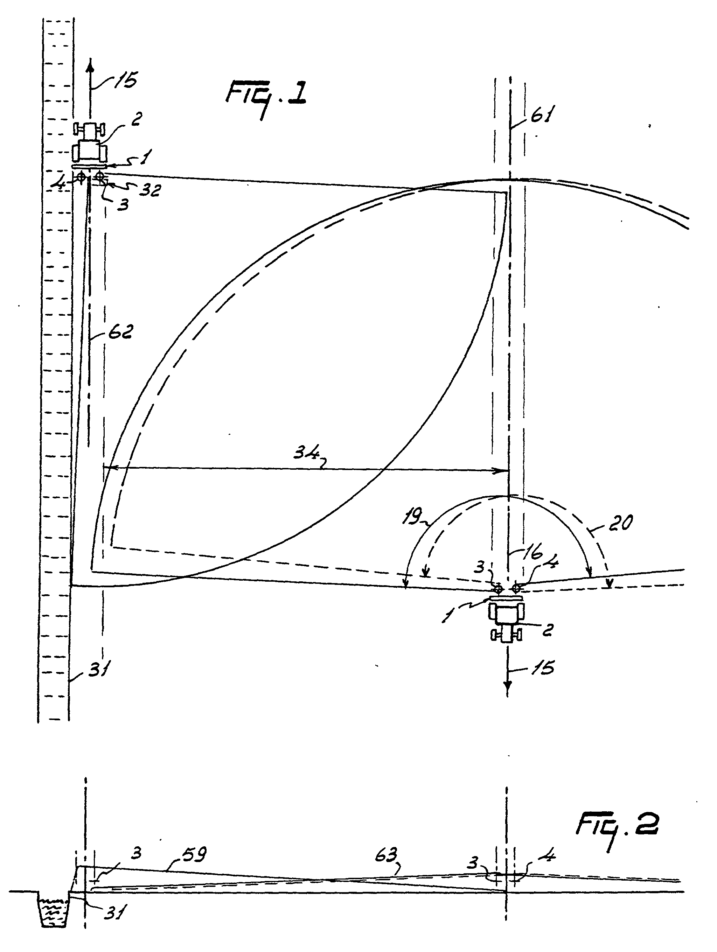

During operation, the implement is moved in the direction 15, during which the material is spread on opposite sides of the centre longitudinal plane 16 of the implement. The centre longitudinal plane 16 is located halfway between the two spreader members 3 and 4 and parallel to the rotary shafts 5 and 6, which extend parallel to each other. The shafts 5 and 6 are in a vertical position when the implement and consequently, in these embodiments, the two spreader members are in the horizontal position. In operation, the spreader members 3 and 4 can be driven in the respective directions of rotation 17 and 18, in which the spreader members spread the material over spread sections 19 and 20. The directions of rotation 17 and 18 are such that the facing sides of the spreader members 3 and 4 move in a direction opposite to the direction in which the material is predominantly spread. In this situation, each of the spreader members spreads the material to both sides of the centre longitudinal plane 16 at least through approximately equal distances, as is shown more in particular in the spread sections which are schematically and partly shown in Figures 1 and 8. The material spread over the spread sections 19 and 20 preferably leaves, as in these embodiments, the periphery of the relevant spreader member through an angle 21 of approximately 180°.

The spreader members 3 and 4 are disposed on a carrier member 24 which in these embodiments is constituted by a cabinet comprising drive means for driving the spreader members. These drive means include a stub axle 25 which projects from the cabinet-like carrier and can be connected in a manner not further shown to the power take-off shaft of the tractor 2 via an intermediate shaft.

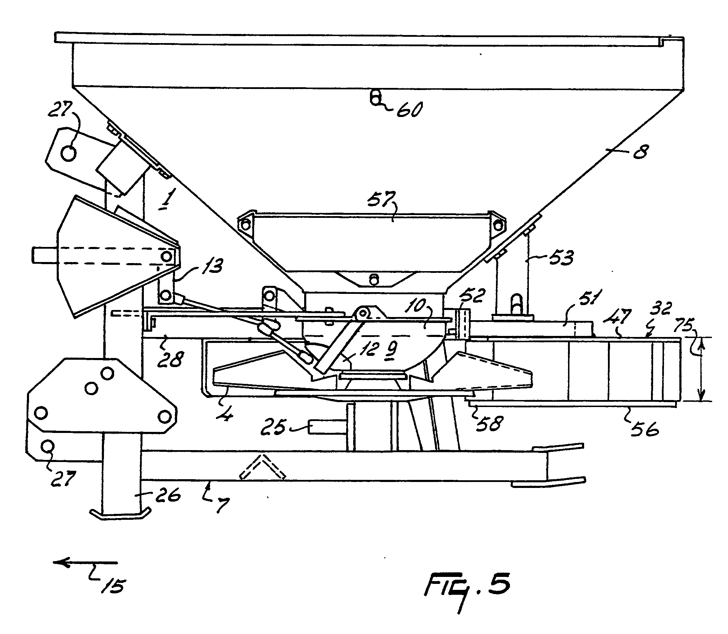

For the connection of the implement to the tractor, the frame 7 of the implement is provided at its leading side with a predominantly vertically extending frame work 26 which includes coupling members 27 which are couplable to the three-point lifting hitch of the tractor. Relative to the normal direction of travel 15, the frame includes rearwardly extending frame beams 28 which support the hopper and are connected to the bottom ends of the discharge nozzles of the hopper. The hopper is further connected, as is shown more particularly in Figure 5, to the upper side of the frame work 26.

For the purpose of spreading material along field edges 31 of, for example, agricultural fields, the implement can be used such that the material is predominantly spread to only one side of the implement. For this spread mode the supply of material to one of the two spreader members is stopped, so that this spreader member does not spread any material any more during the spreading operation along the field edge. In the embodiment, illustrated in Figures 1 to 7, the spread of the material by the spreader member 4 is stopped, which spreader member is located at that side of the centre longitudinal plane 16 that faces the field edge 31. Material will then only be spread by the other spreader member, in this embodiment the spreader member 3. A guide member 32 is provided near this spreader member 3. This guide member is of such a design and is mounted such, that, in normal operation, the material spread by the spreader member 3 to that side of the centre longitudinal plane 16 in which the spreader member 4 is present, is collected by the guide member 32. The material collected by the guide member 32 is diverted such that this collected material is predominantly spread to that side of the centre longitudinal plane 16 in which the spreader member 3 is located. The guide member 32 is designed such that the material collected by this guide member is spread at least predominantly through a distance approximately equal to the distance 34 through which the spreader member 3 spreads the material to that side during normal operation. The guide member 32 is designed such that at least approximately half of the material spread by the spreader member 3 is collected and is diverted for being spread to that side of the centre longitudinal plane 16 where the spreader member 3 is located. The guide member 32 therefore connects up with the spreader member 3 through a circumferential angle 33 which is approximately equal to half the circumferential angle 21 through which the material leaves the periphery of the spreader member for the purpose of being spread.

The guide member 32 comprises a number of guide elements, which number can be chosen in connection with the desired distribution of the material to be spread. The number of guide elements will preferably be not less than five. In this embodiment, the guide member 32 has nine guide elements 35 - 43, the guide element 35 being disposed near that end of the guide member that is nearest to the centre longitudinal plane 16. The guide elements 36 - 43, arranged one after the other from the guide element 35 onwards, are increasingly farther away from the guide element 35 and from the centre longitudinal plane 16 in the direction in which the material is spread. In this embodiment, the guide elements 35 and 36 are both arranged near the centre longitudinal plane 16 and on both sides of this plane.

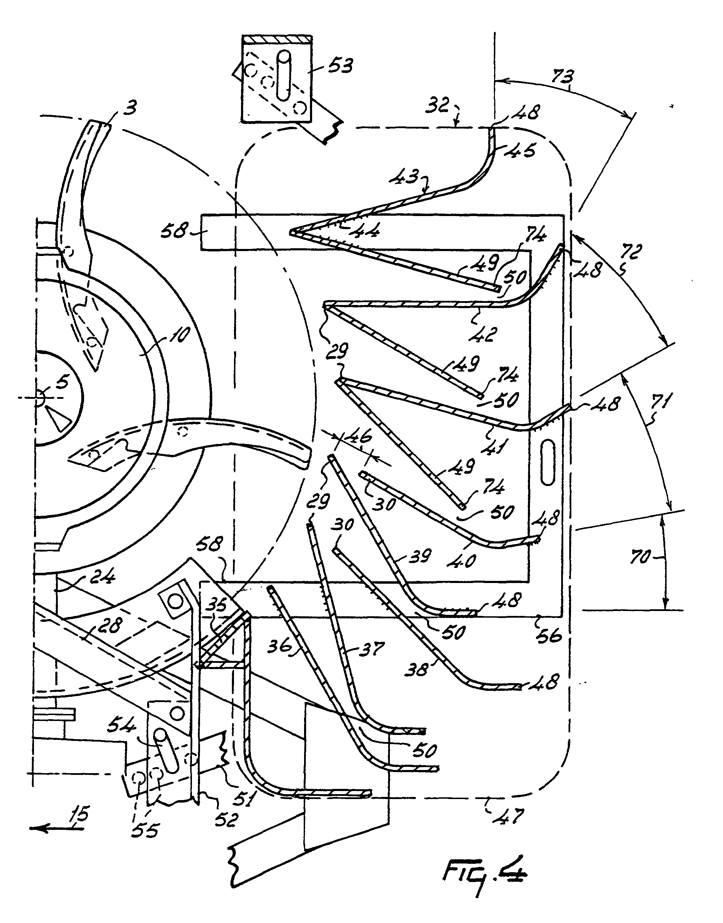

Each of the guide elements 35 - 43 includes two straight portions which are arranged at an angle to each other and are interconnected by curved portions 64. One of these straight portions of each guide element constitutes a collecting member 44. This collecting member 44 of each guide element collects the material leaving the spreader member through a portion of the circumferential angle 33 and conveys this material to the other straight portion of the guide element. This other portion constitutes a member 45 which determines the direction of spread. The collecting member and the spread direction member of each of the guide elements are denoted by the respective reference numerals 44 and 45. The ends 29 of the collecting members 44 of the guide elements connect at an equal and short distance to the circumference of the spreader member 3. In this embodiment, this distance will be approximately 2 cms and, although this distance may be chosen to be slightly different, will preferably be approximately equal to this distance. Only the guide elements 38 and 40 have collecting members 44 which are located at a larger distance from the periphery of the spreader member 3. Those ends 30 of the collecting members 44 of the guide elements 37 and 39 that are nearest to the periphery of the spreader member 3 are located at distances 46 from the ends, located near the periphery of the spreader member 3, of the adjacent guide elements 37 and 39, the arrangement being such as is shown in Figure 4. The distances 46 amount in this embodiment to approximately 3 to 4 cms, but may alternatively be chosen to be slightly different. The extended portions of the collecting members 44 of the guide elements extend at least approximately through the ends 29 of the respective guide elements 37 and 39 which are arranged in a side-by-side relationship in the direction towards the plane 16. The spread direction members 45 of the guide elements 35, 36, 37, 38 and 39 extend in this embodiment at least approximately parallel to the centre longitudinal plane 16 or to the normal direction of travel 15, respectively. The spread direction members 45 of the remaining guide elements extend towards their ends 48 in directions which successively enclose in the direction away form the guide element 40 up to and inclusive of the guide element 43 an increasingly larger angle with the centre longitudinal plane 16. The spread direction members 45 of the consecutive guide elements 40 - 43 enclose in this embodiment respective angles of 10°, 30°, 60° and 90° with the centre plane 16. The angles 70, 71, 72 and 73 between the spread direction members 45 of the consecutive guide elements 39 - 43 are then 10°, 20°, 30° and 40°, respectively. If advisable for the distribution of the material, these angles may alternatively be chosen slightly differently. The element 43 most remote from the plane 16 will, however, by means of its portion 45 enclose an angle with the plane 16 of at least approximately 90°. In addition, the spread direction members 45 of one or a plurality of guide elements may, for example, be disposed such that they are adjustable with respect to the collecting members 44 of these guide elements. The spread direction members 45 of the guide elements 38 and 40 may, for example, be disposed such that they are pivotal and optionally lockable in one of at least two different positions relative to the collecting members 44 of these guide elements 38 and 40. This renders it possible to set the direction in which the material is spread along these spread direction members 45. The distribution of the material over the strip to be spread can be influenced thereby.

The guide member 32 is provided between the consecutive guide elements 40 - 43 with straight guide plates 49. By means of their ends closest to the spreader member 3, the guide plates 49 are contiguous to the ends 29 of the collecting members 44 of the guide elements 41, 42 and 43. In a direction away from the spreader member 3, these guide plates 49 form, together with the guide elements 40, 41 and 42 which are respectively adjacent to each one of them in the direction of the centre longitudinal plane 16, converging spaces, in which the material is collected and can be conveyed to the relevant spread direction members 45 of the guide elements 40, 41 and 42. Those ends 74 of the guide plates 49 remote from the spreader member 3 are located at such a distance from the relevant guide elements that a flow-out aperture 50 having a width of approximately 2 cms (seen in a plan view in Figure 4) is formed. The guide elements 36 and 37 and the guide elements 38 and 39 are arranged such relative to each other that their portions located nearest to each other also form through-flow apertures 50 having a width of approximately 2 cms for guiding the material.

The guide member 32 includes a supporting plate 47, to which the upper sides of the guide elements are connected. This plate 47 is omitted from Figure 4 and only its periphery is represented by means of broken lines. Although in this embodiment the plate 47 extends perpendicularly to the rotary shaft 5, it may alternatively enclose a smaller angle with this rotary shaft. The supporting plate 47 is at a slightly higher level than the upper side of the spreader member 3. The guide elements 35 - 43 are in the shape of plates, the upright sides of these plate-like elements extending parallel to the rotary shaft 5 of the spreader member 3. The guide elements 35 - 43 have a height 75 which is greater than the height of the spreader member 3. The lower and upper sides of the guide elements are then at a lower and a higher level than the lower and upper side of the spreader member. Measured in a direction perpendicular to the centre longitudinal plane 16, the guide member 32 has a length 76 which is approximately equally large, in this embodiment slightly larger than the diameter 77 of the spreader member 3. In this situation, the guide member 32 extends by means of one end 78 from near the centre longitudinal plane 16 to as far as an imaginary plane 80 which is located parallel to the plane 16 and includes that side of the spreader member 3 that is remote from the plane 16. The end 79 of the guide member 32 is then located in parallel with the end 78 and near the plane 80.

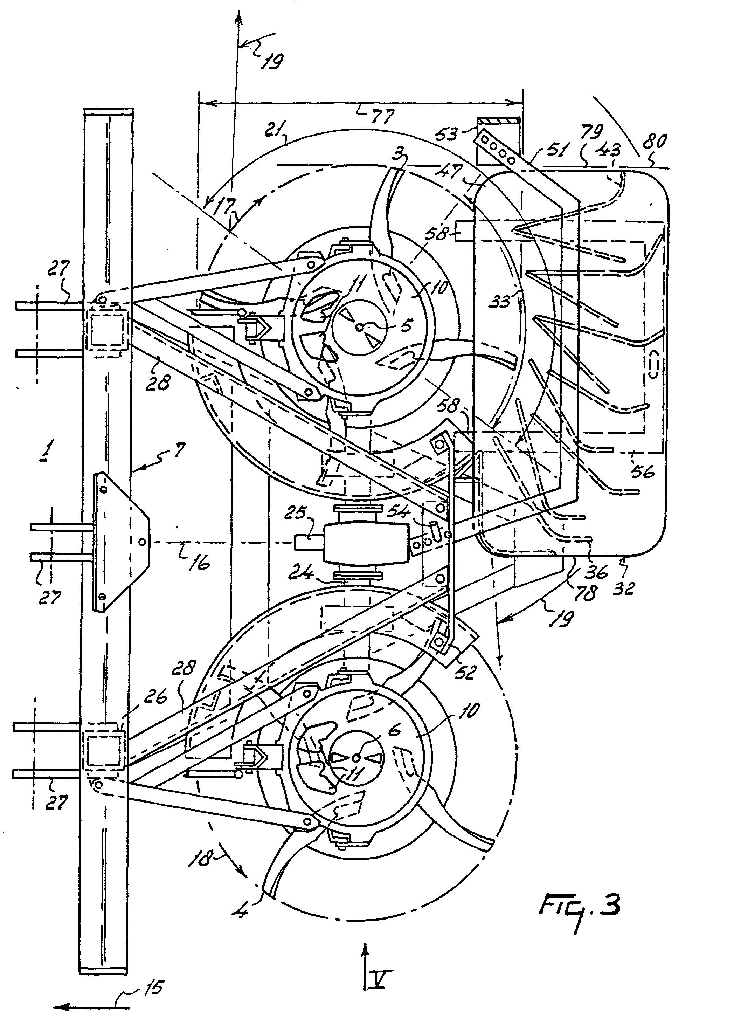

Arranged at the upper side of the supporting plate 47 is a coupling member 51, by means of which the guide member 32 is detachably connected to the implement. In this embodiment, the coupling member 51 includes a strip-like bracket, which has one end connected to a connecting element 52 provided near the ends of the frame beams 48 and the other end to a support 53 attached to the hopper 8, as is shown in Figures 3 and 5. The guide member 32 may alternatively be detachably connected to the implement in a different manner. The coupling member 51 is provided at each of the ends with a plurality of apertures 55, through one of which a locking pin can optionally be inserted for connecting the coupling member 51 to the connecting element 52 and the support 53. By inserting the locking pins 54 optionally in one of the apertures 55, and by connecting them to the element 52 or to the support 53, the position of the guide member 32 relative to the spreader member 3 can be slightly altered.

At the bottom side, the guide member 32 is providec with a hanger 56, via which the guide member 32, when not ir use, can be attached to a collecting bracket 57 attached to one side of the hopper 8, as is shown in Figure 5. When the guide member 32 is attached to the collecting bracket 57, the ends 58 of the hanger 56 are placed in the bracket 57. The guide member 32 is then further attached to the side wall of the hopper 8 by a lock pin 60.

In operation, the implement is moved over the surface area to be spread, either as a self-propelled machine, or connected to a tractor or a suchlike vehicle. For spreadinc material on strips along the edges of the surface to be spread, the implement can be moved very closely to this edge, as is shown in Figure 1 for the track 62 along the field edge 31. The implement can be moved as closely as possible along the field edge in the direction 15. As closely as possible along the field edge is then determined by the width of the machine and the condition of the surface along the field edge. For the spread of material on the strip along the field edge 31, this material is only spread by one of the two spreader members. In this embodiment, this is accomplished by spreading material only via the spreader member 3. The supply of material to the spreader member 4 is then stopped. To spread the material ir the desired manner over the strip, of which one side is constituted by the field edge 31, the guide member 32 is disposed near the spreader member 3, the arrangement being such as in shown more in particular in Figures 3 and 4. The guide member 32 is then provided relative to the direction of operative travel 15 at the rear side of the spreader member 3. When the implement drives in operation along a field edge, the material is supplied to the spreader member 3 in the same manner as for a normal operating run, in which normal operating run the implement is moved over a track, for example the track 61, and wherein the material is spread equally far to both sides of the implement and the centre longitudinal plane 16 by each of the spreader members 3 and 4. During travel over the track 62 along the field edge 31, the material, and this also holds for travel over the track 61, is spread by the spreader member 3 to one side of the centre longitudinal plane 16, in this embodiment in the direction 15 at the right-hand side of the centre longitudinal plane 16, in a manner as for a normal operating run of over half the sector 19. The material, which during travel over a full-field track 61 would be spread to the left-hand side of the centre longitudinal plane 16 by the spreader member 3, is collected by the guide member 32 during travel along the field edge 31. Thus one half of the material, which is normally spread over the entire sector 19, is collected by the guide elements of the guide member 32 and distributed via these guide elements over at least approximately the distance 34 to the right-hand side of the centre longitudinal plane 16, all this being done such that half of the spread sector 19 which during a normal operating run over a full-field track 61 is spread to the left-hand side of the centre longitudinal plane 16, pivots as it were about a horizontal axis, coinciding with the longitudinal centre line of the implement located in the plane 16, to that half spread sector 19 that is located at the right-hand side of the centre longitudinal plane 16.

The guide elements 35 - 43 are arranged such that the distribution of the material spread via these elements is distributed over the entire distance through which the material is spread to the right-hand side at least predominantly in the same manner as the material which is not spread to the right by the spreader member via the guide member. Thus, during travel of the implement over the track 61, at the right-hand side of the implement and to behind the implement a same quantity of material is spread as when, travelling over a full-field track 61, is spread by the two spreader members 3 and 4 to the right-hand side of the implement and to behind the implement. In this manner, a distribution of the material over the edge strip, one side of which is constituted by the field edge 31, is obtained as is schematically shown in Figure 2 by the spread pattern 59. This spread pattern 59 coincides with half the spread pattern 63 obtained at the right-hand side of the longitudinal plane 16 on travel over the track 61. Thus the material can be spread over the surface substantially fully uniformly per unit of surface up to the field edge 31.

The guide elements 35, 36, 37 and 38 have their spread direction members 45 directed in such a manner to the direction of spread which, in this embodiment, points to the rear, that the material is not spread to beyond the field edge 31. The elements 40 - 43 successively guide the material at an increasingly larger angle with the direction of travel 15 in the lateral direction in order to distribute the material in the desired manner at least predominantly over the edge strip 34.

With the object of providing the strip along the field edge 31 with material, it is not necessary to make drastic changes in the implement, except for the fact that the guide member 32 is attached to the implement in such a manner that it encloses a portion of the spreader member 3, the arrangement being such that half of the material thrown by the spreader member 3 is collected by the guide member 32 and is distributed over the spread sector located at that side of the centre longitudinal plane 16 at which the spreader member 3 is arranged relative to this plane 16.

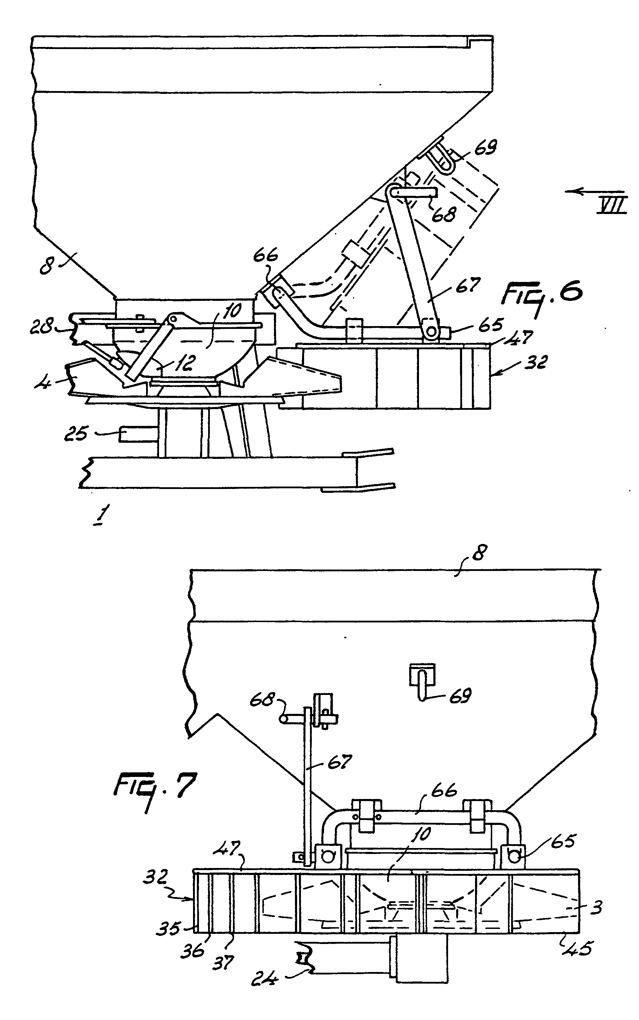

Although in this embodiment the guide member 32 is detachably fastened by means of the locking pins 54 to the implement, it will alternatively be possible to connect the guide member 32 in a different manner to the implement. It is, for example, possible to connect the guide member 32 pivotably to the implement. The guide member can then be moved from, for example, the working position in which the guide member 32 connects to the spreader member 3, to a rest position in which it is free from the spreader member. From this rest position, the guide member can then easily be moved to the working position again. Such a pivotal connection of the guide member 32 to the implement is shown in greater detail in Figures 6 and 7.

In the construction shown in Figures 6 and 7, the guide member 32 is provided at its upper side with a coupling member 65 which is connected capably of pivoting about a pivot pin 66 to the hopper 8. A locking member 67, in the form of a rod or strip, is connected pivotably to the guide member 32. By means of a lock pin 68 or a different type of connecting member, this locking member 67 can be connected to the hopper 8 so as to position the guide member 32 in the desired working position around the spreader member. The locking member 67 and/or coupling member 65 can, if so desired, be adjustable to render it possible to move the guide member optionally to one of two or a plurality of working positions relative to the spreader member.

The guide member 32 can be moved from the working position to a rest position by rotation about the pivot pin 66. The guide member 32 can be moved, for example, to a rest position, as illustrated in Figure 6 by means of broken lines. This rest position can, for example, be locked by a locking member 69. In this rest position, the locking member 67 can be positioned along the upper side of the guide member by, for example, a pivotal motion relative to the guide member 32.

Although in the present embodiment for spreading material over a strip which is contiguous to the field edge 31 a guide member 32 is arranged about a portion of the spreader member 3, it will alternatively be possible to connect for the purpose of spreading material over a strip along a field edge 31 a guide member to the spreader member 4 instead of to the spreader member 3. Using the same directions of rotation 17 and 18 of the spreader members 3 and 4, a guide member connectable to the spread member 4 may be formed such that it is mirror-inverted relative to the centre longitudinal plane 16 and the guide member 32. If such a mirrored guide member is placed around the spreader member 4, then a strip along a field edge 31 can be provided with material in a manner as illustrated by the spread pattern 59 by moving the implement along the field edge in a direction opposite to the direction 15 shown in Figure 1. The material will then be spread by the spreader member 4 to the left-hand side of the direction of travel. The guide member 32, such as it is shown in the drawings or a corresponding mirrored guide member which is connectable to the spreader member 4, is in both cases contiguous to the spreader member that is remote from the field edge, or located at that side of the centre longitudinal plane 16 that is remote from the side where the field edge 31 is located relative to the centre longitudinal plane.

If one or a plurality of spread direction members 45 of the guide elements is/are arranged capable of pivoting relative to the collecting member 44, the position of the spread direction members can be varied to obtain a desired distribution over the strip along the field edge, the arrangement being such that the desired spray pattern, for example the spray pattern 59, is obtained.

As is shown in this embodiment more particularly in Figure 4, the ends of the collecting members 44 which are contiguous to the circumference of the spreader member 3 are provided with interspaces which are at least approximately equal to each other. These ends of the guide elements are all located, with the exception of the ends of the elements 38 and 40, on the same imaginary circle about the rotary shaft 5. In this situation, the material will be collected through the circumferential angle 33, through which the material leaves the spreader member 3 and flows to the guide member 32, distributed in accordance with the interspaces between the collecting members 44 of the relevant guide members, and be spread with this distribution by the spread direction members 45 of the relevant guide elements 35 - 43.

Since the guide elements 38 and 40 have their ends 30 located at a distance 46 from the ends 29 of the adjacent guide elements 37 and 39, they distribute by means of the respective elements 37 and 39 the material supplied between the elements 37, 39 and between the elements 39, 40, respectively, to the guide member 32 through a portion of the width of the strip to be spread.

## Claims

1. An implement for spreading material, comprising at least two spreader members (3, 4) arranged at opposite sides of a plane of symmetry (16), each of these spreader members (3, 4) being rotatable driven about an upwardly extending axis of rotation (100) in opposite directions (17, 18), which directions are in plan view at the outersides of the implement backwards, the implement being provided behind the rear side of a spreader member (3) viewed in the direction of movement (15), with a guide member (32) for the material to be spread, said guide member (32) having a number of guide elements (35 - 43), characterized in that guide plates (49) are arranged between some consecutive guide elements (40-43), and in that by means of their ends closest to the spreader members (3,4) these guide plates (49) are contiguous to the ends (29) of collecting members (44) of some of the guide elements (35 - 43).

2. An implement according to claim 1, characterized in that the collecting member (44) and a neighbouring guide plate (49) enclose a sharp angle which is open in a backwards direction with respect to the direction of movement (A) of the implement.

3. An implement according to claim 1 or 2, characterized in that in the direction of rotation (17) of the spreader member (3) the angle of a number of the guide elements (35-42) with the direction of movement A is increasing.

4. An implement according to any one of the claims 1 to 3, characterized in that a guide element (35) encloses an angle of 90° with the direction of movement (A) of the implement, this guide element being situated near a plane of symmetry (16) situated between the two spreader members (3, 4).

5. An implement according to claim 4, characterized in that the guide member (35) which encloses an angle of 90° with the direction of movement (A) of the implement is having a free end extending in the direction of movement (A) of the implement.

6. An implement according to any one of the preceding claims, characterized in that the ends of a number of guide elements (35 - 41) are extending in the direction of movement (A) of the implement.

7. An implement according to any one of the preceding claims, characterized in that by the guide member (32) the material is spread behind the spreader member (3), such that at the outerside of the rotating spreader member (3) with which the guide member is co-operating the material is up to a short distance of a fence at that side of the implement wherein the spreader member (3) is rotating backwards with respect to the direction of movement (A) of the implement.

8. An implement according to any one of the preceding claims, characterized in that the guide member (32) is detachably connected to the implement.

9. A guide member according to any one of the preceding claims for use with an implement as claimed in any one of the preceding claims.

## Patentansprüche

1. Gerät zum Streuen von Gut mit mindestens zwei Streugliedern (3, 4), die auf gegenüberliegenden Seiten einer Symmetrieebene (16) angeordnet sind, wobei jedes dieser Streuglieder (3, 4) um eine aufwärts gerichtete Drehachse (100) in entgegengesetzten Richtungen (17, 18) drehbar ist, die in der Draufsicht an den Außenseiten des Gerätes nach hinten verlaufen, wobei das Gerät in bezug auf die Arbeitsrichtung (15) hinter der Rückseite eines Streugliedes (3) mit einem Führungsglied (32) für das zu streuende Gut versehen ist, wobei das Führungsglied (32) eine Anzahl von Führungselementen (35 bis 43) aufweist,
dadurch gekennzeichnet, daß zwischen einigen aufeinanderfolgenden Führungselementen (40 bis 43) Führungsplatten (49) angeordnet sind, und daß diese Führungsplatten (49) mit ihren den Streugliedern (3, 4) am nächsten liegenden Enden an die Enden (29) von Aufnahmegliedern (44) einiger Führungselemente (35 bis 43) angrenzen.

2. Gerät nach Anspruch 1,
dadurch gekennzeichnet, daß das Aufnahmeglied (44) und
eine angrenzende Führungsplatte (49) einen spitzen Winkel bilden, der in bezug auf die Arbeitsrichtung (A) des Gerätes nach hinten offen ist.

3. Gerät nach Anspruch 1 oder 2,
dadurch gekennzeichnet, daß in Drehrichtung (17) des Streugliedes (3) der Winkel, den eine Anzahl von Führungselementen (35 bis 42) mit der Arbeitsrichtung (A) bildet, zunimmt.

4. Gerät nach einem der Ansprüche 1 bis 3,
dadurch gekennzeichnet, daß ein Führungselement (35) mit der Arbeitsrichtung (A) des Gerätes einen Winkel von 90° bildet, wobei dieses Führungselement nahe einer Symmetrieebene (16) angeordnet ist, die zwischen den beiden Streugliedern (3, 4) liegt.

5. Gerät nach Anspruch 4,
dadurch gekennzeichnet, daß das Führungsglied (35), das einen Winkel von 90° mit der Arbeitsrichtung (A) des Gerätes bildet, ein freies Ende aufweist, das sich in Arbeitsrichtung (A) des Gerätes erstreckt.

6. Gerät nach einem der vorhergehenden Ansprüche,
dadurch gekennzeichnet, daß sich die Enden einer Anzahl von Führungselementen (35 bis 41) in Arbeitsrichtung (A) des Gerätes erstrecken.

7. Gerät nach einem der vorhergehenden Ansprüche,
dadurch gekennzeichnet, daß das Gut von dem Führungsglied (32) in der Weise hinter dem Streuglied (3) ausgestreut wird, daß das Gut an der Außenseite des rotierenden Streugliedes (3), mit dem das Führungsglied zusammenwirkt, bis auf eine kurze Distanz an eine Begrenzung auf der Seite des Gerätes heranreicht, auf der sich das Streuglied (3) in bezug auf die Arbeitsrichtung (A) des Gerätes nach hinten dreht.

8. Gerät nach einem der vorhergehenden Ansprüche,
dadurch gekennzeichnet, daß das Führungsglied (32) lösbar mit dem Gerät verbunden ist.

9. Führungsglied nach einem der vorhergehenden Ansprüche zur Verwendung mit einem Gerät nach einem der vorhergehenden Ansprüche.

## Revendications

1. Outil d'épandage d'une matière, comportant au moins deux éléments épandeurs (3, 4) agencés au niveau de côtés opposés d'un plan de symétrie (16), chacun des éléments épandeurs (3, 4) étant entraîné de manière rotative dans des directions opposées (17, 18) autour d'un axe de rotation s'étendant vers le haut (100), directions qui sont, dans une vue de dessus, dirigées vers l'arrière de l'outil, au niveau des côtés extérieurs, l'outil étant muni, derrière le côté arrière d'un élément épandeur (3), vu dans la direction de déplacement (15), d'un organe de guidage (32) destiné à la matière à épandre, ledit organe de guidage (32) ayant de nombreux d'éléments de guidage (35 à 43), caractérisé en ce que des plaques de guidage (49) sont agencées entre certains éléments de guidage consécutifs (40 à 43), et en ce que par l'intermédiaire de leurs extrémités les plus proches des éléments épandeurs (3, 4) ces plaques de guidage (49) sont contiguës aux extrémités (29) des éléments de récupération (44) de certains des éléments de guidage (35 à 43).

2. Outil selon la revendication 1, caractérisé en ce que l'élément de récupération (44) et une plaque de guidage voisine (49) définissent un angle aigu qui est ouvert vers l'arrière par rapport à la direction de déplacement (A) de l'outil.

3. Outil selon la revendication 1 ou 2, caractérisé en ce que dans la direction de rotation (17) de l'élément épandeur (3), l'angle de plusieurs éléments de guidage (35 à 42) avec la direction de déplacement (A) est croissant.

4. Outil selon l'une quelconque des revendications 1 à 3, caractérisé en ce qu'un élément de guidage (35) délimite un angle de 90° avec la direction de déplacement (A) de l'outil, cet élément de guidage étant positionné à proximité d'un plan de symétrie (16) situé entre les deux éléments épandeurs (3, 4).

5. Outil selon la revendication 4, caractérisé en ce que l'élément de guidage (35) qui délimite un angle de 90° avec la direction, de déplacement (A) de l'outil a une extrémité libre s'étendant dans la direction de déplacement (A) de l'outil.

6. Outil selon l'une quelconque des revendications précédentes, caractérisé en ce que les extrémités de plusieurs éléments de guidage (35 à 41) s'étendent dans la direction de déplacement (A) de l'outil.

7. Outil selon l'une quelconque des revendications précédentes, caractérisé en ce que par l'intermédiaire de l'organe de guidage (32), la matière est épandue derrière l'élément épandeur (3), de telle sorte qu'au niveau du côté extérieur de l'élément épandeur rotatif (3) avec lequel l'organe de guidage coopère, la matière est à une courte distance d'une barrière située au niveau du côté de l'outil où l'élément épandeur (3) tourne vers l'arrière par rapport à la direction de déplacement (A) de l'outil.

8. Outil selon l'une quelconque des revendications précédentes, caractérisé en ce que l'organe de guidage (32) est connecté de manière amovible à l'outil.

9. Organe de guidage selon l'une quelconque des revendications précédentes, destiné à être utilisé avec un outil tel que revendiqué dans l'une quelconque des revendications précédentes.
